# FASCICULE DE BREVET EUROPEEN

(11) **EP 1 784 358 B1**
(45) Date de publication et mention de la délivrance du brevet: **26.01.2011**
(21) Numéro de dépôt: 05795978.5
(22) Date de dépôt: 08.08.2005
(51) Int. Cl.: C01G 23/00, H01M 4/48

(54) **COMPOSE PULVERULENT D'OXYDE MIXTE DE TITANE ET DE LITHIUM DENSE, PROCEDE DE FABRICATION D'UN TEL COMPOSE ET ELECTRODE COMPORTANT UN TEL COMPOSE**
DICHTE MISCHOXIDPULVERVERBINDUNG AUS TITAN UND LITHIUM, HERSTELLUNGSVERFAHREN DAFÜR UND ELEKTRODE DAMIT
DENSE TITANIUM AND LITHIUM MIXED OXIDE POWDER COMPOUND, METHOD FOR PRODUCING SAID COMPOUND AND COMPOUND-CONTAINING ELECTRODE

(30) Priorité: 31.08.2004 FR 0409207
(43) Date de publication de la demande: 16.05.2007
(73) Titulaire: Commissariat à l'Énergie Atomique et aux Énergies Alternatives, 75015 Paris (FR)
(72) Inventeur: BOURBON, Carole, 38590 Saint-Michel-de-Saint Geoirs (FR); JOUANNEAU-SI LARBI, Séverine, 38210 Saint Quentin Sur Isere (FR); LE CRAS, Frédéric, 38470 Notre Dame de l'Osier (FR); LIGNIER, Hélène, 38380 Saint Laurent du Pont (FR)
(74) Mandataire: Hecké, Gérard
(86) Numéro de dépôt international: PCT/FR2005/002052
(87) Numéro de publication internationale: WO 2006/027449

(56) Documents cités:
- EP-A- 1 057 783
- US-A1- 2003 017 104
- US-A1- 2003 129 496
- US-A1- 2004 110 063
- PATENT ABSTRACTS OF JAPAN vol. 2000, no. 22, 9 mars 2001 (2001-03-09) & JP 2001 143702 A (SUMITOMO ELECTRIC IND LTD; KANSAI ELECTRIC POWER CO INC:THE), 25 mai 2001 (2001-05-25)
- PATENT ABSTRACTS OF JAPAN vol. 2003, no. 09, 3 septembre 2003 (2003-09-03) & JP 2003 137547 A (TITAN KOGYO KK), 14 mai 2003 (2003-05-14) cité dans la demande
- PATENT ABSTRACTS OF JAPAN vol. 2002, no. 11, 6 novembre 2002 (2002-11-06) & JP 2002 211925 A (ISHIHARA SANGYO KAISHA LTD), 31 juillet 2002 (2002-07-31)

## Description

### Domaine technique de l'invention

L'invention concerne un composé pulvérulent d'oxyde mixte de titane et de lithium, un procédé de fabrication d'un tel composé et une électrode pour un système électrochimique de stockage d'énergie comportant un tel composé.

### État de la technique

Les systèmes électrochimiques de stockage d'énergie comprennent, entre autres, les systèmes de stockage d'énergie fonctionnant avec du lithium. De tels systèmes comportent, alors, au moins une électrode mettant en jeu le lithium. Plus particulièrement, les systèmes appelés accumulateurs au lithium comportent deux électrodes mettant en jeu du lithium. Il existe également des systèmes hybrides qui ne comportent qu'une seule électrode mettant en jeu le lithium.

Les accumulateurs au lithium ou batteries au lithium ont, de plus en plus, tendance à remplacer les accumulateurs rechargeables à base de nickel-cadmium (Ni-Cd) ou de nickel-hydrure (Ni-MH) comme source d'énergie autonome, en particulier dans les éléments portables. Les accumulateurs au lithium présentent, en effet, des performances, et notamment une densité d'énergie massique, supérieures à celles des accumulateurs Ni-Cd et Ni-MH.

Les accumulateurs au lithium reposent sur le principe d'insertion et de désinsertion d'un ion Li⁺ dans l'électrode positive. En effet, l'électrode positive comporte au moins un matériau capable d'insérer dans sa structure un certain nombre de cations Li⁺. Ainsi, les matériaux utilisés comme matériau actif de l'électrode positive sont, généralement, choisis parmi TiS₂, NbSe₃, V₂O₅, LiCoO₂, LiNiO₂, LiMn₂O₄, LiV₃O₈ et, plus récemment, LiFePO₄. L'électrode négative de tels accumulateurs au lithium peut être génératrice d'ions Li⁺ ou bien également comporter un matériau actif d'intercalation du lithium. Ainsi, le matériau actif de l'électrode négative est, généralement choisi parmi du lithium métallique, un alliage de lithium, un mélange nanométrique d'un alliage de lithium dans un oxyde de lithium, un nitrure de lithium et de métal de transition, un matériau d'intercalation ou d'insertion du lithium tel que du carbone sous forme graphite ou un matériau de structure spinelle comportant du lithium et du titane Li₁₊ₓTi_{(2-y)/4}O₄, avec x et y respectivement compris entre 0 et 1 pour réaliser le matériau actif de l'électrode négative.

Dans la demande de brevet JP2003137547, il a été proposé d'utiliser un oxyde mixte de titane et de lithium Li₄Ti₅O₁₂ en tant que matériau actif d'une électrode positive ou négative d'un accumulateur secondaire au lithium. L'oxyde Li₄Ti₅O₁₂ est obtenu en mélangeant des précurseurs dans de l'eau, puis en séchant le mélange avant de le traiter thermiquement à une température comprise entre 700°C et 1000°C. Le mélange est ensuite broyé de manière à obtenir un composé sous forme de poudre, avec une répartition granulométrique homogène, un diamètre moyen des grains compris entre 0,5 et 1,5µm et un diamètre maximal de 25µm. Bien que l'oxyde Li₄Ti₅O₁₂ ainsi réalisé permette d'obtenir un accumulateur au lithium présentant de bonnes performances en puissance, sa densité n'excède, cependant, pas 0,85g/ml. Or, cette faible densité présente l'inconvénient de former des électrodes volumineuses et donc des accumulateurs au lithium encombrants.

Dans la demande de brevet US2003/0017104, l'oxyde Li₄Ti₅O₁₂ est synthétisé de manière à obtenir un diamètre de particules contrôlé et homogène compris entre 5nm et 2000nm, avec une surface spécifique comprise entre 1 et 400m²/g. La synthèse de l'oxyde consiste à broyer une source d'oxyde mixte de titane et de lithium mise en solution dans de l'eau, de manière à obtenir un diamètre de grain prédéterminé, inférieur à celui souhaité pour l'oxyde final. Puis, la solution est séchée par atomisation et re-traitée thermiquement, par exemple à une température comprise entre 250°C et 900°C. Les étapes de séchage et de traitement thermique permettent d'augmenter le diamètre des particules et d'obtenir une distribution granulométrique étroite et une surface spécifique contrôlée. Après l'étape de traitement thermique, le produit peut être re-dispersé dans de l'eau pour séparer les agglomérats formés pendant le traitement thermique.

### Objet de l'invention

L'invention a pour but d'obtenir un composé pulvérulent d'oxyde mixte de titane et de lithium, ayant, à la fois, une forte densité et de bonnes performances électrochimiques et présentant, de préférence, des taux d'impuretés et de défauts structuraux faibles.

Selon l'invention, ce but est atteint par les revendications annexées.

Plus particulièrement, ce but est atteint par le fait que le composé pulvérulent est constitué de particules ayant un diamètre inférieur ou égal à 1µm et d'au moins 10% en volume de grains ayant un diamètre inférieur ou égal à 100µm et formés par agglomération desdites particules.

Selon un premier développement de l'invention, la proportion des grains formés par agglomération est comprise entre 30% et 50% en volume par rapport au volume total du composé.

Selon un second développement de l'invention, le diamètre des particules est compris entre 0,1µm et 0,5µm.

L'invention a également pour but un procédé de fabrication d'un composé pulvérulent d'oxyde mixte de titane et de lithium, facile à mettre en oeuvre et contribuant à obtenir un composé dense sans détériorer les performances électrochimiques du composé.

Selon l'invention, ce but est atteint par le fait que le procédé comporte au moins les étapes successives suivantes :
- synthèse d'un oxyde mixte de titane et de lithium pulvérulent,
- broyage de l'oxyde pendant une durée comprise entre 24 heures et 48 heures, dans un broyeur planétaire, de manière à former des particules ayant un diamètre inférieur ou égal à 1µm et au moins 10% en volume de grains ayant un diamètre inférieur ou égal à 100µm, les grains étant formés par agglomération desdites particules,
- traitement thermique à une température comprise entre 450°C et 600°C.

Selon un développement de l'invention, l'étape de broyage de l'oxyde est réalisée avec moins de 5% en volume d'un solvant organique par rapport au volume total d'oxyde mixte de titane et de lithium.

Selon une autre caractéristique de l'invention, l'étape de synthèse de l'oxyde mixte de titane et de lithium comprend au moins :
- une étape de broyage de précurseurs de l'oxyde mixte de titane et de lithium pendant une durée comprise entre 1 et 2 heures,
- une étape de traitement thermique avec une température atteignant 900°C.

L'invention a également pour but d'obtenir une électrode comportant un composé pulvérulent d'oxyde mixte de titane et de lithium et permettant d'obtenir un système électrochimique de stockage d'énergie performant en puissance et de volume limité.

Selon l'invention, ce but est atteint par le fait que l'électrode comporte au moins un composé pulvérulent d'oxyde mixte de titane et de lithium constitué de particules ayant un diamètre inférieur ou égal à 1µm et d'au moins 10% en volume de grains ayant un diamètre inférieur ou égal à 100µm et formés par agglomération desdites particules.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente la répartition granulométrique d'un composé pulvérulent selon l'invention, obtenue par granulométrie laser.
La figure 2 représente un cliché obtenu par microscopie électronique à balayage d'un composé pulvérulent selon l'invention.
La figure 3 représente l'évolution de la capacité d'un accumulateur au lithium comportant une électrode positive à base d'un composé pulvérulent selon l'invention, en fonction du nombre de cycles, à différents régimes de courant.

### Description de modes particuliers de réalisation

Selon l'invention, un composé pulvérulent d'oxyde mixte de titane et de lithium, plus particulièrement un composé de formule brute Li₄Ti₅O₁₂ ou bien un dérivé de Li₄Ti₅O₁₂, est constitué :
- d'un premier groupe granulométrique formé de particules unitaires de Li₄Ti₅O₁₂ ou d'un dérivé de Li₄Ti₅O₁₂,
- et d'un second groupe granulométrique constitué de grains formés par agglomération d'un certain nombre desdites particules unitaires.

Parmi les dérivés de Li₄Ti₅O₁₂, le composé pulvérulent peut être, par exemple, choisi parmi Li₍₄₋ₓ₎MₓTi₅O₁₂ et Li₄Ti_{(5-y)}N_{y}O₁₂, où x et y sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par particules unitaires, on entend des particules non liées entre elles, ayant un diamètre inférieur ou égal à 1µm et, de préférence, compris entre 0,1µm et 0,5µm. Les grains constitués par l'agglomération de particules unitaires, sont également appelés particules agglomérées et ils ont un diamètre inférieur ou égal à 100µm.

De plus, la proportion de grains formés par agglomération est d'au moins 10% en volume par rapport au volume total du composé pulvérulent. Préférentiellement, la proportion des grains est comprise entre 30% et 50% en volume par rapport au volume total du composé. Ainsi, le composé pulvérulent de formule brute Li₄Ti₅O₁₂ peut, par exemple, comprendre 60% en volume de particules unitaires et 40% en volume de grains constitués par agglomération desdites particules, de sorte que chaque grain a un diamètre très supérieur au diamètre de chaque particule.

Une telle répartition granulométrique permet d'obtenir un composé d'oxyde mixte de titane et de lithium ayant une densité tassée (ou tapée) élevée, de préférence supérieure ou égale à 1g/cm³. Par ailleurs, la surface spécifique mesurée selon la technique BET (Brunauer-Emmet-Teller) est, de préférence, comprise entre 5 et 30 m²/g et, plus particulièrement, de l'ordre de 10 m²/g.

Un tel composé pulvérulent est, de préférence, obtenu en réalisant, préalablement, la synthèse de l'oxyde mixte de titane et de lithium Li₄Ti₅O₁₂ ou un de ses dérivés, par tout type de moyen connu, à partir de précurseurs ou réactifs. A titre d'exemple, Li₄Ti₅O₁₂ est formé, par voie sèche, en faisant réagir du carbonate de lithium (Li₂CO₃) avec de l'oxyde mixte de titane ou rutile (TiO₂) selon la réaction suivante :

2,06 Li₂CO₃ + 5 TiO₂ → Li₄Ti₅O₁₂ + 2,06 CO₂ + 0,06 Li₂O

Li₂CO₃ est légèrement mis en excès, de manière à contrebalancer l'évaporation de ce réactif au cours de la réaction.

La synthèse est réalisée en mélangeant intimement les réactifs dans un broyeur planétaire avec un solvant tel que de l'heptane, pendant 1 à 2 heures. Le mélange est, ensuite, séché et disposé dans un creuset en alumine pour à subir un traitement thermique jusqu'à une température atteignant 900°C. Le traitement thermique est, de préférence, lent, avec, par exemple, une vitesse de montée en température de l'ordre de 1 °C à 3°C par minute et deux paliers de température compris entre 450°C et 550°C et entre 650°C et 700°C, pendant 10 à 20 heures. Le mélange peut, ensuite, subir un traitement thermique supplémentaire avec une vitesse de refroidissement de 0,5°C à 2°C par minute, après un éventuel broyage intermédiaire. L'étape de synthèse permet, ainsi, d'obtenir un oxyde mixte de titane et de lithium Li₄Ti₅O₁₂ pur et pulvérulent, avec un diamètre moyen généralement supérieur à 1µm et une répartition granulométrique étroite.

Pour obtenir un dérivé de Li₄Ti₅O₁₂ tel que Li₍₄₋ₓ₎MₓTi₅O₁₂ ou Li₄Ti_{(5-y)}N_{y}O₁₂, un précurseur de l'élément M ou de l'élément N est ajouté aux réactifs de l'oxyde, avant le traitement thermique.

L'oxyde mixte de titane et de lithium pulvérulent est, ensuite, disposé dans un broyeur planétaire, également appelé broyeur centrifuge, pour subir un broyage intense, pendant une durée comprise entre 24 et 48 heures. A titre d'exemple, un bol en agate de 250ml, destiné à être mis en rotation à une vitesse de rotation de 400 tours par minute et comportant 10 billes de 20mm de diamètre est utilisé pour broyer 100g de composé pulvérulent. Le broyage est, de préférence réalisé avec moins de 5% en volume d'un solvant organique, par exemple choisi parmi l'heptane et l'hexane. Plus particulièrement, il est réalisé à sec, c'est-à-dire sans utiliser de solvant, ce qui favorise la formation l'agglomération des particules unitaires.

Lors de cette étape de broyage intense, la taille des particules de Li₄Ti₅O₁₂ est réduite de manière à obtenir des particules ayant un diamètre inférieur ou égal à 1µm. De plus, certaines particules sont plaquées par les billes, sur les bords du bol, créant, ainsi, à la fin du broyage, des amas de particules liées entre elles.

Ces amas forment alors des grains ayant un diamètre maximal de 100µm, dans une proportion d'au moins 10% en volume par rapport au volume total du composé.

L'étape de broyage intense permet donc d'obtenir un composé pulvérulent comportant deux groupes granulométriques distincts, mais elle induit, dans le composé pulvérulent, des contraintes et des défauts structuraux qui peuvent se révéler néfastes dans le domaine d'application des électrodes pour accumulateur au lithium et plus particulièrement pour les performances électrochimiques du composé.

Pour palier cet inconvénient, le composé pulvérulent est introduit, sous atmosphère inerte, de l'argon par exemple, dans un tube en quartz. Le tube en quartz est ensuite scellé puis introduit, pendant 10 à 30 minutes dans un four préchauffé à une température inférieure à la température du traitement thermique réalisé lors de la synthèse de l'oxyde. Plus particulièrement, la température du four est comprise entre 450°C et 600°C et, de préférence, à 500°C. Cette étape de traitement thermique permet, ainsi, de relâcher les contraintes et les défauts générés dans les cristaux d'oxyde mixte de titane et de lithium, lors de l'étape de broyage intense.

Un tel procédé de fabrication, tout en étant facile à mettre en oeuvre, permet d'obtenir, un composé pulvérulent dense, sans altérer ses performances électrochimiques. En effet, un tel procédé permet d'obtenir un composé présentant une répartition granulométrique particulière réduisant, par agglomération, une partie du volume occupé par les cristaux de Li₄Ti₅O₁₂, et augmentant, ainsi, la densité tapée du composé. De plus le composé présente des performances électrochimiques équivalentes à celles d'un composé Li₄Ti₅O₁₂ dont la répartition granulométrique est homogène et étroite car les grains, formés par agglomération, restent accessibles à l'intercalation du lithium.

Par ailleurs, le composé pulvérulent, présente, avantageusement, un taux d'impureté inférieur ou égal à 1% par mole de titane et des taux de défauts structuraux et de contrainte faibles, ce qui améliorent les performances électrochimiques.

Dans un mode particulier de réalisation, l'oxyde Li₄Ti₅O₁₂ est synthétisé en mélangeant 201,05 grammes de TiO₂ avec 76,11 grammes de Li₂CO₃ dans un broyeur planétaire, avec de l'heptane, pendant 1 à 2 heures. Le mélange obtenu est, ensuite, séché à 60°C pendant 12 heures, puis il est disposé dans un creuset en alumine de 250ml. Le creuset est, alors introduit dans un four à moufle, pour synthétiser l'oxyde par traitement thermique selon les étapes suivantes :
- une première montée en température, à une vitesse de traitement de 2°C par minute, de manière à atteindre un premier palier à une température 500°C maintenue pendant 15 heures,
- une seconde montée en température, à une vitesse de traitement de 2°C par minute, jusqu'à un second palier à une température de 680°C maintenue pendant 15 heures,
- une troisième montée en température, à une vitesse de traitement de 2°C par minute, jusqu'à un palier final, à une température de 900°C maintenue pendant 5 heures.

La poudre obtenue est, ensuite, homogénéisée au broyeur planétaire, dans de l'heptane, pendant une heure, avant de subir un traitement thermique supplémentaire. Le traitement thermique supplémentaire consiste en une montée en température jusqu'à 900°C, avec une vitesse de traitement de 5°C par minute, la température étant, ensuite, maintenue à 900°C, pendant 5 heures, puis, abaissée de 25°C par minute jusqu'à atteindre la température ambiante.

190 grammes de Li₄Ti₅O₁₂ ainsi obtenus, sont alors mélangés dans un broyeur planétaire, pendant une durée de 24 heures à 48 heures, à la vitesse maximale délivrée par le broyeur, et plus particulièrement à 400 tours par minute. Puis, 20 à 30 grammes du mélange sont introduits, sous atmosphère inerte, dans un tube en quartz destiné à subir un traitement thermique pendant 15 minutes, dans un four chauffé préalablement à une température de 500°C. Le tube est ensuite sorti rapidement du four pour refroidir à température ambiante.

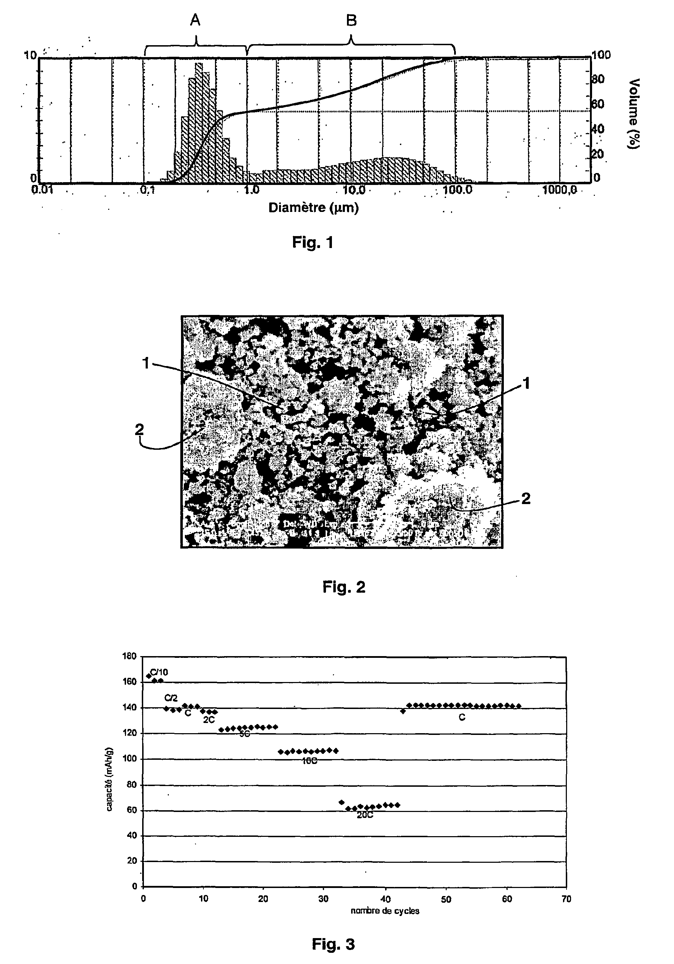

Le composé pulvérulent ainsi obtenu présente une densité tapée de 1,4 g/cm³. L'analyse par granulométrie laser, représentée à la figure 1, montre que le composé est constitué, principalement, de deux groupes particulaires A et B. Le groupe A présente une distribution granulométrique étroite, avec un diamètre de particules compris entre 0,1µm et 1µm et un diamètre moyen de l'ordre de 0,5µm tandis que le groupe B a une répartition granulométrique étendue, entre 1µm et 100µm. Par ailleurs, les proportions respectives des groupes A et B sont de l'ordre de 60% et 40% en volume. L'observation au microscope électronique à balayage (MEB), illustré par le cliché de la figure 2, confirme également la morphologie particulière du composé pulvérulent, avec deux types de particules 1 et 2 de tailles distinctes. Les particules 1 représentent les particules du groupe A, avec un diamètre inférieur à 1µm tandis que les particules 2 représentent les grains plus volumineux du groupe B. Par ailleurs, le cliché de la figure 2 montre que les grains 2 sont constitués par des amas de particules 1, obtenus par agglomération.

La densité du composé pulvérulent ainsi obtenu permet de former une électrode pour un système électrochimique de stockage d'énergie, tel qu'un accumulateur au lithium, performant avec un volume limité. Ainsi, une électrode peut, par exemple, être constituée d'une nano-dispersion comportant au moins le composé pulvérulent d'oxyde mixte de titane et de lithium, avec au moins un additif conducteur et/ou un liant polymère. Selon un mode particulier de réalisation, une électrode est constituée d'un collecteur de courant en aluminium sur lequel est déposé un mélange comprenant 80% en masse d'un oxyde dense Li₄Ti₅O₁₂, 8% en masse d'un additif conducteur, par exemple du noir de carbone, et 12% en masse d'un liant organique polymère. Le liant organique polymère est, par exemple choisi parmi un polyéther, un polyester ou un polymère à base de méthylméthacrylate, d'acrylonitrile ou de fluorure de vinylidène.

Une telle électrode peut être, par exemple, utilisée comme électrode positive dans un accumulateur au lithium comportant, en outre, une électrode négative, en lithium métallique et un séparateur imbibé d'électrolyte liquide. L'électrolyte liquide peut être constitué par tout type d'électrolyte liquide connu dans le domaine des accumulateurs au lithium. Il est, par exemple, constitué d'un sel de lithium tel que LiClO₄, LiAsF₆, LiPF₆, LiBF₄ ou LiCH₃SO₃, dissous dans un solvant aprotique tel que le carbonate d'éthylène, le carbonate de propylène, du diméthylcarbonate, du diéthylcarbonate et/ou du méthyléthylcarbonate.

Ainsi, un accumulateur au lithium comportant une électrode positive à base du composé pulvérulent Li₄Ti₅O₁₂, une électrode de lithium métallique et un séparateur imbibé d'un électrolyte liquide contenant 1 M de LiFP₆ en solution dans du carbonate de propylène a été testé. L'électrode positive comporte un collecteur de courant en aluminium sur lequel a été déposé un mélange comprenant 80% en masse de Li₄Ti₅O₁₂ dense, 8% en masse de noir de carbone et 12% en masse d'hexafluorure de polyvinylidène. Dans ce cas, Li₄Ti₅O₁₂ joue le rôle de matériau d'insertion et de désinsertion du lithium provenant de l'électrode négative et permet l'échange de trois ions lithium, avec un plateau à 1,55V par rapport au lithium.

La figure 3 illustre l'évolution de la capacité de l'accumulateur au lithium en fonction du nombre de cycles, à différents régimes de courant C/N, où N est le nombre d'heures par charge et par décharge de l'accumulateur, c'est-à-dire par insertion et désinsertion du lithium dans le matériau Li₄Ti₅O₁₂. On observe, ainsi:
- que plus N est petit, plus le courant est fort et plus les cycles de charge et de décharges sont rapides,
- qu'à régime faible, par exemple C/10, l'accumulateur atteint une capacité nominale de 160mAh/g,
- que, pour tous les régimes (de C/10 à 20C), le comportement de l'accumulateur au lithium est stable,
- qu'à fort régime, par exemple à 20C, la capacité de l'accumulateur au lithium est encore de l'ordre de 60mAh/g, c'est-à-dire 40% de la capacité nominale obtenue à faible régime.

Cet accumulateur présente, donc, d'excellentes propriétés électrochimiques et, plus particulièrement une capacité élevée, aussi bien à bas régime (C/10) qu'à haut régime (20C). Par ailleurs, la capacité nominale étant élevée, c'est-à-dire la capacité par gramme de matériau actif étant élevée et le composé pulvérulent présentant une forte densité, la capacité volumique est d'autant plus élevée.

L'invention n'est pas limitée aux modes de réalisation décrits ci-dessus. A titre d'exemple, le composé pulvérulent peut, également, être utilisé comme matériau actif dans une électrode négative pour accumulateur au lithium. Dans ce cas, l'électrode positive comporte un matériau actif de tout type connu dans le domaine des accumulateurs au lithium. L'électrode positive peut, par exemple, comporter LiFePO₄, LiMn₂O₄ ou LiNi_{0,5}Mn_{1,5}O₄. A titre d'exemple, l'accumulateur au lithium peut comporter une électrode négative comportant Li₄Ti₅O₁₂ selon l'invention, une électrode positive comportant LiFePO₄ et un séparateur imbibé d'un électrolyte liquide constitué par 1 M de LiPF₆ en solution dans du carbonate de propylène. Les électrodes positive et négative sont alors montées, de manière à avoir 3 LiFePO₄ en face de 1 Li₄Ti₅O₁₂, pour utiliser 100% de la capacité de stockage du matériau actif de l'électrode négative. Un tel accumulateur fonctionne alors au potentiel de 1,9 V par rapport au lithium.

Pour un système électrochimique de stockage d'énergie hybride, la seconde électrode, l'électrode positive, est, par exemple, constituée par du carbone à haute surface spécifique.

## Revendications

1. Composé pulvérulent d'oxyde mixte de titane et de lithium **caractérisé en ce qu'**il est constitué de particules (1) ayant un diamètre inférieur ou égal à 1µm et d'au moins 10% en volume de grains (2) ayant un diamètre inférieur ou égal à 100µm et formés par agglomération desdites particules (1).

2. Composé selon la revendication 1, **caractérisé en ce que** la proportion des grains (2) formés par agglomération est comprise entre 30% et 50% en volume par rapport au volume total du composé.

3. Composé selon l'une des revendications 1 et 2, **caractérisé en ce que** le diamètre des particules (1) est compris entre 0,1 µm et 0,5µm.

4. Composé selon l'une quelconque des revendications 1 à 4, **caractérisé en ce que** le composé a un taux d'impureté inférieur ou égal à 1% par mole de titane.

5. Composé selon l'une quelconque des revendications 1 à 4, **caractérisé en ce que** sa formule brute est choisie parmi Li₄Ti₅O₁₂ et ses dérivés.

6. Composé selon la revendication 5, **caractérisé en ce que** les dérivés de Li₄Ti₅O₁₂ sont choisis parmi Li₍₄₋ₓ₎MₓTi₅O₁₂ et Li₄Ti_{(5-y)}N_{y}O₁₂, où x et y sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

7. Composé selon l'une quelconque des revendications 1 à 6, **caractérisé en ce qu'**il présente une densité tapée supérieure ou égale à 1g/cm³.

8. Composé selon l'une quelconque des revendications 1 à 7, **caractérisé en ce qu'**il présente une surface spécifique comprise entre 5 et 30m²/g.

9. Procédé de fabrication d'un composé pulvérulent d'oxyde mixte de titane et de lithium selon l'une quelconque des revendications 1 à 8, **caractérisé en ce qu'**il comporte au moins les étapes successives suivantes :
- synthèse d'un oxyde mixte de titane et de lithium pulvérulent,
- broyage de l'oxyde pendant une durée comprise entre 24 heures et 48 heures, dans un broyeur planétaire, avec moins de 5% en volume d'un solvant organique, par rapport au volume total d'oxyde mixte de titane et de lithium et
- traitement thermique à une température comprise entre 450°C et 600°C.

10. Procédé selon la revendication 9, **caractérisé en ce que** l'étape de synthèse de l'oxyde mixte de titane et de lithium comprend au moins :
- une étape de broyage de précurseurs de l'oxyde mixte de titane et de lithium pendant une durée comprise entre 1 et 2 heures,
- une étape de traitement thermique avec une température atteignant 900°C.

11. Procédé selon la revendication 10, **caractérisé en ce que** les précurseurs de l'oxyde mixte de titane et de lithium sont TiO₂ et Li₂CO₃.

12. Procédé selon l'une des revendications 10 et 11, **caractérisé en ce qu'**un précurseur d'un élément chimique choisi parmi Na, K, Mg, Nb, Al, Ni, Co, Zr, Cr, Mn, Fe, Cu, Zn, Si et Mo est ajouté aux précurseurs de l'oxyde mixte de titane et de lithium, lors de l'étape de broyage.

13. Electrode pour un système électrochimique de stockage d'énergie comportant au moins un composé pulvérulent d'oxyde mixte de titane et de lithium selon l'une quelconque des revendications 1 à 8.

14. Electrode selon la revendication 13, **caractérisée en ce qu'**elle est constituée par une nano-dispersion du composé pulvérulent avec au moins un additif conducteur et/ou un liant polymère.

## Claims

1. Powdery compound of mixed titanium lithium oxide **characterized in that** it consists of particles (1) having a diameter less than or equal to 1 µm and of at least 10% by volume of grains (2) having a diameter less than or equal to 100µm and formed by agglomeration of said particles (1).

2. Compound according to claim 1, **characterized in that** the proportion of the grains (2) formed by agglomeration is comprised between 30% and 50% by volume with respect to the total volume of the compound.

3. Compound according to one of the claims 1 and 2, **characterized in that** the diameter of the particles (1) is comprised between 0.1 µm and 0.5µm.

4. Compound according to any one of the claims 1 to 4, **characterized in that** the compound has an impurity ratio less than or equal to 1% per mole of titanium.

5. Compound according to any one of the claims 1 to 4, **characterized in that** its empirical formula is chosen from Li₄Ti₅O₁₂ and the derivatives thereof.

6. Compound according to claim 5, **characterized in that** the derivatives of Li₄Ti₅O₁₂ are chosen from Li₍₄₋ₓ₎MₓTi₅O₁₂ and Li₄Ti_{(5-y)}N_{y}O₁₂, where x and y are respectively comprised between 0 and 0.2 and M and N are respectively chemical elements chosen from Na, K, Mg, Nb, Al, Ni, Co, Zr, Cr, Mn, Fe, Cu, Zn, Si and Mo.

7. Compound according to any one of the claims 1 to 6, **characterized in that** it presents a packed density greater than or equal to 1 g/cm³.

8. Compound according to any one of the claims 1 to 7, **characterized in that** it presents a specific surface comprised between 5 and 30m²/g.

9. Method for producing a powdery compound of mixed titanium lithium oxide according to any one of the claims 1 to 8, **characterized in that** it comprises at least the following successive steps:
- synthesizing a powdery mixed titanium lithium oxide,
- grinding the oxide for a duration comprised between 24 hours and 48 hours in a planetary mill, with less than 5% by volume of an organic solvent with respect to the total volume of mixed titanium lithium oxide and,
- thermal treatment at a temperature comprised between 450°C and 600°C.

10. Method according to claim 9, **characterized in that** the step of synthesizing the mixed titanium lithium oxide comprises at least:
- a grinding step of precursors of the mixed titanium lithium oxide for a duration comprised between 1 and 2 hours,
- a thermal treatment step with a temperature reaching 900°C.

11. Method according to claim 10, **characterized in that** the precursors of mixed titanium lithium oxide are TiO₂ and Li₂CO₃.

12. Method according to one of the claims 10 and 11, **characterized in that** a precursor of a chemical element chosen from Na, K, Mg, Nb, Al, Ni, Co, Zr, Cr, Mn, Fe, Cu, Zn, Si and Mo is added to the precursors of mixed titanium lithium oxide during the grinding step.

13. Electrode for an electrochemical energy storage system comprising at least a powdery compound of mixed titanium lithium oxide according to any one of the claims 1 to 8.

14. Electrode according to claim 13, **characterized in that** it consists of a nano-dispersion of the powdery compound with at least a conducting additive and/or a polymer binder.

## Patentansprüche

1. Pulverförmige Titan-Lithium-Mischoxid-Verbindung,
**dadurch gekennzeichnet,**
**dass** sie aus Partikeln (1) besteht, die einen Durchmesser von kleiner als oder gleich 1 µm haben, und aus mindestens 10% Volumenanteil Körnern (2), die einen Durchmesser von kleiner als oder gleich 100 µm haben und durch Agglomerisieren der Partikel (1) gebildet werden.

2. Verbindung nach Anspruch 1,
**dadurch gekennzeichnet,**
**dass** der Anteil der Körner (2), die durch Agglomerisieren gebildet werden, zwischen 30% und 50% Volumenanteil vom Gesamtvolumen der Verbindung beträgt.

3. Verbindung nach einem der Ansprüche 1 und 2,
**dadurch gekennzeichnet,**
**dass** der Durchmesser der Partikel (1) zwischen 0,1 µm und 0,5 µm liegt.

4. Verbindung nach einem der Ansprüche 1 bis 3,
**dadurch gekennzeichnet,**
**dass** die Verbindung einen Verunreinigungsgrad von weniger als oder gleich 1% pro Titan-Mol aufweist.

5. Verbindung nach einem der Ansprüche 1 bis 4,
**dadurch gekennzeichnet,**
**dass** ihre Bruttoformel aus Li₄Ti₅O₁₂ und dessen Derivaten gewählt ist.

6. Verbindung nach Anspruch 5,
**dadurch gekennzeichnet,**
**dass** die Derivate von Li₄Ti₅O₁₂ aus Li₍₄₋ₓ₎MₓTi₅O₁₂ und Li₄Ti_{(5-y)}N_{y}O₁₂ gewählt sind, wobei x und y jeweils zwischen 0 und 0,2 liegen und M und N jeweils chemische Elemente sind, die aus Na, K, Mg, Nb, Al, Ni, Co, Zr, Cr, Mn, Fe, Cu, Zn, Si und Mo gewählt sind.

7. Verbindung nach einem der Ansprüche 1 bis 6,
**dadurch gekennzeichnet,**
**dass** sie eine Dichte aufweist, die beliebig größer oder gleich 1 g/cm³ ist.

8. Verbindung nach einem der Ansprüche 1 bis 7,
**dadurch gekennzeichnet,**
**dass** sie eine spezifische Oberfläche aufweist, die zwischen 5 und 30 m²/g beträgt.

9. Verfahren zur Herstellung einer pulverförmigen Titan-Lithium-Mischoxid-Verbindung nach einem der Ansprüche 1 bis 8,
**dadurch gekennzeichnet,**
**dass** es mindestens die folgenden, aufeinanderfolgenden Schritte umfasst:
- Synthese eines pulverförmigen Titan-Lithium-Mischoxids,
- Mahlen des Oxids während einer Dauer von 24 Stunden bis 48 Stunden in einer Planetenmühle mit mindestens 5% Volumenanteil eines organischen Lösungsmittels, bezogen auf das Gesamtvolumen des Titan-Lithium-Mischoxids, und
- Wärmebehandlung bei einer Temperatur von 450 °C bis 600 °C.

10. Verfahren nach Anspruch 9,
**dadurch gekennzeichnet,**
**dass** der Schritt der Synthese des Titan-Lithium-Mischoxids mindestens umfasst:
- einen Schritt des Mahlens von Vorläuferstoffen des Titan-Lithium-Mischoxids während einer Dauer von 1 Stunden bis 2 Stunden,
- einen Schritt der Wärmebehandlung bei einer Temperatur von bis zu 900 °C.

11. Verfahren nach Anspruch 10,
**dadurch gekennzeichnet,**
**dass** die Vorläuferstoffe des Titan-Lithium-Mischoxids TiO₂ und Li₂Co₃ sind.

12. Verfahren nach einem der Ansprüche 10 und 11,
**dadurch gekennzeichnet,**
**dass** ein Vorläuferstoff eines chemischen Elements, das aus Na, K, Mg, Nb, Al, Ni, Co, Zr, Cr, Mn, Fe, Cu, Zn, Si und Mo gewählt wird, den Vorläuferstoffen des Titan-Lithium-Mischoxids während des Arbeitsschritts des Mahlens beigefügt wird.

13. Elektrode für ein elektrochemisches Energiespeichersystem, das mindestens eine pulverförmige Titan-Lithium-Mischoxid-Verbindung nach einem der Ansprüche 1 bis 8 enthält.

14. Elektrode nach Anspruch 13,
**dadurch gekennzeichnet,**
**dass** sie von einer Nano-Dispersion der pulverförmigen Verbindung mit mindestens einem leitenden Zusatz und/oder einem Polymer-Bindemittel gebildet wird.
